# EUROPÄISCHE PATENTSCHRIFT

(11) **EP 1 969 380 B1**
(45) Veröffentlichungstag und Bekanntmachung des Hinweises auf die Patenterteilung: **13.04.2016**
(21) Anmeldenummer: 06819342.4
(22) Anmeldetag: 09.11.2006
(51) Int. Cl.: G01P 3/487, H01F 7/02, H02K 7/00, F16D 27/01, G01D 5/16

(54) **MAGNET-BAUEINHEIT ZUR BEFESTIGUNG AUF EINER WELLE**
MAGNET MODULE FOR FIXING TO A SHAFT
UNITE A AIMANT DESTINEE A ETRE FIXEE SUR UN ARBRE

(30) Priorität: 28.12.2005 DE 102005062784
(43) Veröffentlichungstag der Anmeldung: 17.09.2008
(73) Patentinhaber: Robert Bosch GmbH, 70442 Stuttgart (DE)
(72) Erfinder: BECKER, Joachim, 31249 Stedum (DE); MALY, Robert, 31139 Hildesheim (DE); BEIER, Mirco, 31028 Gronau (DE); BERGMANN, Dirk, 38122 Braunschweig (DE)
(86) Internationale Anmeldenummer: PCT/EP2006/068256
(87) Internationale Veröffentlichungsnummer: WO 2007/079996

(56) Entgegenhaltungen:
- EP-A- 1 498 911
- EP-A2- 0 986 159
- DE-A1- 10 152 151
- DE-A1- 19 848 081

## Beschreibung

### Stand der Technik

Die Erfindung bezieht sich auf eine Magnet-Baueinheit zur Befestigung auf einer Welle nach dem Oberbegriff des Anspruches 1.

EP 0 986 159 A2 offenbart den Oberbegriff des Anspruchs 1.

In der EP 1 498 911 A1 wird ein Ringmagnet zur Befestigung auf einer Ankerwelle beschirieben, die Teil eines elektromotorischen Stellantriebes ist. Der Ringmagnet sitzt drehfest auf der Ankerwelle auf und hat gemeinsam mit einem Sensor die Funktion einer Positionserfassungseinrichtung, indem beim Umlauf der Ankerwelle eine vom Ringmagneten erzeugte Magnetfeldänderung im zugeordneten Sensor registriert wird, woraus auf die zurückgelegte Ankerwellenumdrehung geschlossen werden kann. Zur Befestigung auf der Ankerwelle weist der Ringmagnet einen zentralen Durchbruch auf, mit dem der Magnet auf die Welle aufgeschoben wird. An der Innenfläche des Durchbruches sind radiale Fortsätze angeformt, die ein elastisches Klemmelement sichern, welches zur festen Verbindung des Ringmagneten auf der Welle dient.

Der Ringmagnet wird im Kunststoff-Spritzgussverfahren hergestellt, wobei in die Kunststoffmasse gleichmäßig verteilte, magnetisierbare Zusatzpartikel eingebracht sind, die nach dem Spritzgießen mithilfe eines Prägemagneten gemäß eines vorgegebenen Musters magnetisierbar sind.

### Aufgabe und Vorteile der Erfindung

Der Erfindung liegt die Aufgabe zugrunde, ein Magnet-Bauteil anzugeben, das mit einfachen Maßnahmen und in flexibler Weise herzustellen und zur Befestigung auf einer Welle hergerichtet ist.

Diese Aufgabe wird erfindungsgemäß mit den Merkmalen des Anspruches 1 gelöst. Die Unteransprüche geben zweckmäßige Weiterbildungen an.

Die neuartige Magnet-Baueinheit umfasst einen Magnethalter und ein Magnetelement, die als separate Bauteile ausgeführt sind. Der Magnethalter wird im Kunststoff-Spritzgießverfahren hergestellt, wobei das mindestens eine Magnetelement in das Kunststoffmaterial des Magnethalters eingespritzt wird. Magnethalter und Magnetelement sind klar abgegrenzte, separate Bauteile, die jeweils für sich gesehen auf ihren Einsatzzweck hin angepasst werden können. Dies führt zu einem hohen Maß flexibler Handhabung und Anpassung, wodurch die Herstellungskosten reduziert werden können. Vorteilhaft ist, dass das im Spritzgießverfahren zu verarbeitende Kunststoffmaterial des Magnethalters keine magnetisierbaren Zusätze benötigt; die magnetischen Eigenschaften rühren vom Magnetelement her, das als eigenständiges Bauteil in den Magnethalter eingebracht wird. Auch im Hinblick auf die erforderlichen magnetischen Eigenschaften, beispielsweise die Magnetstärke oder das magnetische Prägemuster im Magnetelement, ist eine leicht durchzuführende Anpassung an die jeweiligen Gegebenheiten möglich.

Das Magnetelement, welches zweckmäßig scheibenförmig ausgebildet ist, kann einer Stirnseite der Welle axial unmittelbar vorgelagert sein. Der Magnethalter ist vorteilhaft hohlzylindrisch in Form einer Hülse ausgebildet, deren eine Stirnseite von dem Magnetelement gebildet wird, wodurch man eine topfförmige Magnet-Baueinheit erhält, umfassend den Magnethalter und das Magnetelement. Der Magnethalter wird auf die Welle aufgeschoben, derart, dass eine zentrale Ausnehmung im Magnethalter flächig auf der Mantelfläche der zylindrischen Welle aufsitzt.

Hierbei kann es vorteilhaft sein, an der inneren Mantelfläche der zylindrischen Ausnehmung im Magnethälter ein Federelement vorzusehen, das quer zur Wellenachse eine Federkraft erzeugt und den Magnethalter gegenüber dem Wellenmantel abstützt. Dem Federelement kommt toleranzausgleichende Wirkung zu, indem unterschiedliche Wärmeausdehnungen von Welle und Magnethalter ausgeglichen werden, die gegebenenfalls zu einer Spaltbildung zwischen den zusammenwirkenden Mantelflächen der Ausnehmung und der Welle führen können. Das Federelement ist insbesondere als Toleranzring ausgeführt, der zweckmäßig in eine Einlegenut eingesetzt ist, welche in die Mantelfläche der zylindrischen Ausnehmung des Magnethalters eingebracht ist. Der Toleranzring umgreift hierbei die Welle in Umfangsrichtung.

Die Magnetbaueinheit ist zweckmäßig Teil einer Positionserfassungseinrichtung zur Bestimmung der aktuellen Winkellage der Welle. Diese Positionserfassungseinrichtung umfasst neben der Magnetbaueinheit mit Magnethalter und Magnetelement auch einen vorzugsweise ortsfesten Drehzahlsensor, der Magnetfeldänderungen sensiert, die durch den Umlauf des Magnetelementes erzeugt werden. Über eine zugeordnete Auswerteeinrichtung können die im Drehzahlsensor ermittelten Sensorsignale ausgewertet und zugehörige, die aktuelle Winkelposition der Welle repräsentierende Winkelwerte ermittelt werden:

Die Magnetbaueinheit als Bestandteil einer Positionserfassungseinrichtung wird vorteilhaft auf die Anker- bzw. Rotorwelle eines Elektromotors aufgesetzt.

### Zeichnungen

Weitere Vorteile und zweckmäßige Ausführungen sind den weiteren Ansprüchen, der Figurenbeschreibung und den Zeichnungen zu entnehmen. Es zeigen:
Fig. 1 einen Schnitt durch einen Elektromotor mit Stator und Rotorwelle, an deren einer Stirnseite eine Magnet-Baueinheit angeordnet ist, die Teil einer Positionserfassungseinrichtung zur Bestimmung der aktuellen Winkellage der Rotorwelle ist,
Fig. 2 einen Schnitt durch die Stirnseite der Rotorwelle mit aufgesetzter Magnet-Baueinheit, die einen Magnethalter und ein Magnetelement umfasst, mit zugeordnetem Sensor.

### Ausführungsbeispiel

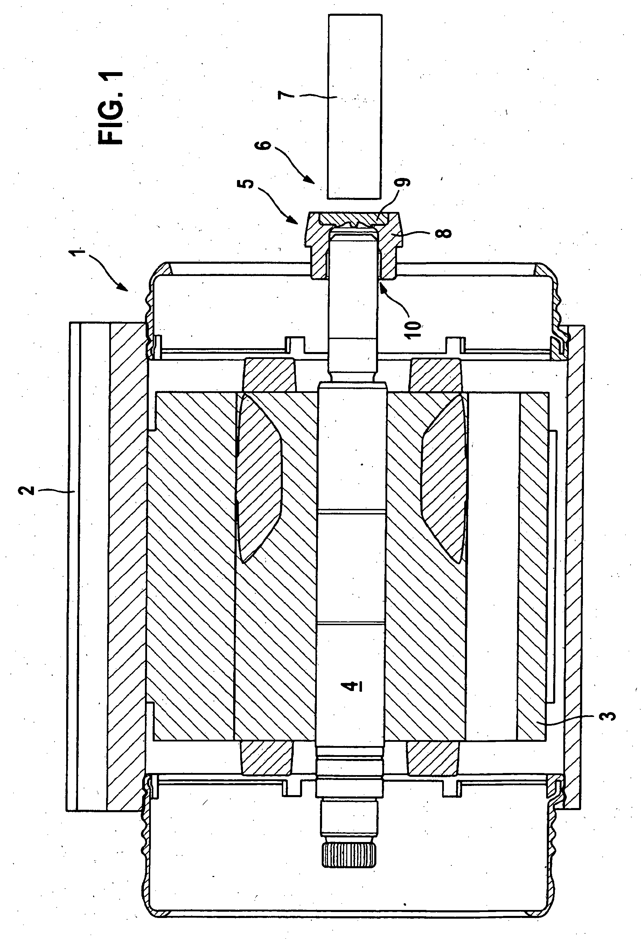

Der in Fig. 1 dargestellte Elektromotor 1 umfasst in einem Gehäuse 2 einen gehäusefesten Stator 3 und eine darin umlaufende Rotorwelle 4, die im Bereich einer Stirnseite eine Magnet-Baueinheit 5 trägt. Diese Magnetbaueinheit 5 ist zweiteilig aufgebaut und umfasst einen Magnethalter 8, der drehfest mit der Rotorwelle 4 verbunden ist, sowie ein im Magnethalter 8 fest aufgenommenes Magnetelement 9. Magnethalter 8 und Magnetelement 9 sind als separate Bauteile ausgeführt. Die Magnet-Baueinheit 5 ist insgesamt Teil einer Positionserfassungseinrichtung 6, der zusätzlich zur Magnet-Baueinheit 5 ein Sensor 7 zugeordnet ist, welcher ortsfest außerhalb des Gehäuses 2 des Elektromotors angeordnet ist und mit dem Magnetelement 9 zusammenwirkt. Bei einer Rotation der Rotorwelle 4 läuft auch die Magnet-Baueinheit 5 einschließlich Magnetelement 9 um, wobei die durch das Umlaufen hervorgerufenen Änderungen im Magnetfeld des Magnetelementes 9 von dem Sensor 7 erfasst werden und aus den Sensorsignalen in einer nicht dargestellten Auswerteeinheit auf die Rotation der Rotorwelle rückgerechnet werden kann. Die Magnet-Baueinheit 5 an der Stirnseite der Rotorwelle 4 ragt teilweise aus dem Gehäuse 2 des Elektromotors 1 heraus. Außerhalb des Gehäuses befmdet sich das Magnetelement 9, das der axialen Stirnseite der Rotorwelle vorgelagert und unmittelbar zu dieser benachbart angeordnet ist. Da sich das Magnetelement 9 außerhalb des Gehäuses 2 befindet, ist auch keine Schwächung des Magnetfeldes durch das Gehäuse 2 zu erwarten.

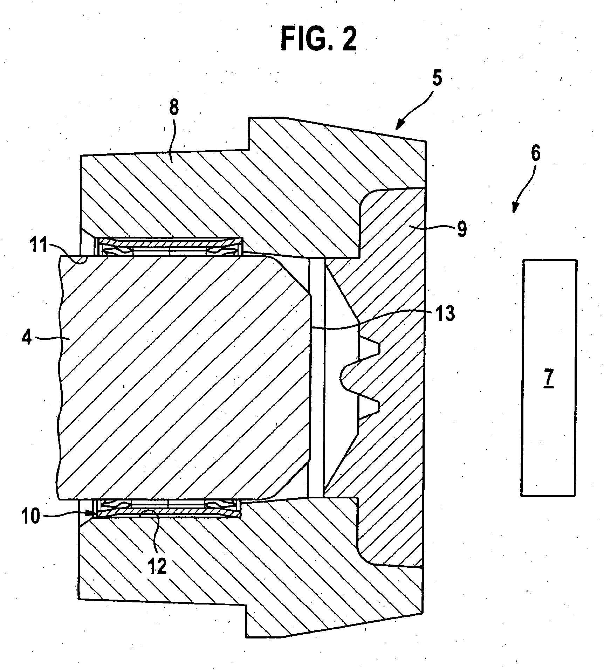

Für eine drehfeste Sicherung des Magnethalters 8 auf der Rotorwelle 4 ist, wie insbesondere Fig. 2 zu entnehmen, im Bereich der inneren Mantelfläche 11 einer zentralen Ausnehmung im Magnethalter 8 ein Toleranzring 10 angeordnet, der die äußere Mantelfläche der Rotorwelle 4 vollständig umgreift. Dieser Toleranzring 10 hat die Funktion eines Federelementes und erzeugt eine radial wirkende Klemmkraft zwischen dem auf die Rotorwelle 4 aufgeschobenen Magnethalter 8 und der Rotorwelle. Der Toleranzring 10 ist in eine umlaufende Einlegenut 12 eingesetzt, die in die innere Mantelfläche 11 der Ausnehmung im Magnethalter 8 eingebracht ist. Hierdurch ist der Toleranzring 10 axial und radial gesichert. Über den Toleranzring 10 können unterschiedlich große Wärmedehnungen zwischen Rotorwelle 4 und Magnethalter 8 kompensiert werden.

Der Magnethalter 8 ist als hohlzylindrische Hülse ausgeführt, an deren einer Stirnseite das Magnetelement 9 angeordnet ist. Das Magnetelement 9 deckt die Stirnseite des Magnethalters 8 vollständig ab und bildet dessen Boden; die Ebene des zweckmäßig scheibenförmigen Magnetelements 9 liegt senkrecht zur Wellenachse der Rotorwelle 4. Der Magnethalter 8 ist teilweise auf die Rotorwelle 4 aufgeschoben, teilweise überragt der Magnethalter 8 die freie Stirnseite 13 der Rotorwelle 4. Das Maghetelement 9 befindet sich in Achsrichtung gesehen vollständig vor der Stirnseite 13 der Rotorwelle 4. Das Magnetelement 9 besitzt einen Durchmesser, der größer ist als der Durchmesser der Rotorwelle 4.

In einer alternativen Ausführung kann es aber auch zweckmäßig sein, eine unrunde Form des Magnetelementes 9 vorzusehen, beispielsweise eine eckige Kontur, oder Ausnehmungen in das Magnetelement einzubringen, beispielsweise eine Ringform vorzusehen. Außerdem ist es auch möglich, dass sich Abschnitte des Magnetelementes 9 teilweise über die Mantelfläche der Rotorwelle erstrecken. Gemäß einer weiteren Ausführung ist es im Falle einer Ringform des Magnetelements 9 auch möglich, dass dieses teilweise oder vollständig über die Rotorwelle 4 geschoben ist.

Der Magnethalter 8 ist als Kunststoff-Spritzguss-Bauteil ausgeführt, das im Spritzgussverfahren hergestellt wird. Das Magnetelement 9 wird nach dem Herstellungsprozess des Magnethalters 8 in das Material des Magnethalters eingespritzt, so dass das Magnetelement 9 durch Verschmelzung fest und insbesondere drehsicher im Magnethalter 8 aufgenommen ist. Das Magnetelement 9 besteht insbesondere aus einem metallischen, unter Umständen kunststoffgebundenen, magnetischen bzw. magnetisierbaren Werkstoff.

Nach der Herstellung des Verbundes aus Magnethalter 8 und Magnetelement 9 im Wege des Spritzgussverfahrens wird der Toleranzring 10 in die Einlegenut 12 eingesetzt, die vorteilhaft bereits während des Spritzgussverfahrens und damit in einem gemeinsamen Arbeitsgang in die innere Mantelfläche der Ausnehmung eingebracht wird. Anschließend wird die Magnet-Baueinheit 5 über die axiale Stirnseite 13 auf die äußere Mantelfläche der Rotorwelle 4 aufgeschoben. Der Toleranzring 10 in der Einlegenut 12 sorgt für eine axial und radial sichernde Klemmkraft, wodurch die Magnetbaueinheit 5 sowohl axial als auch radial und in Umfangsrichtung fest mit der Rotorwelle 4 verbunden ist, jedoch gegebenenfalls auch wieder von dieser gelöst werden kann. Die Magnet-Baueinheit 5 wird axial so weit auf die Rotorwelle aufgeschoben, dass das Magnetelement 9 einen geringen axialen Abstand zur Stirnseite 13 der Rotorwelle 4 aufweist. Es kann aber auch zweckmäßig sein, dass das Magnetelement 9 unmittelbar an der Stirnseite 13 zur Anlage kommt.

## Patentansprüche

1. Magnet-Baueinheit zur Befestigung auf einer Welle, mit einem auf der Welle (4) zu befestigenden Magnethalter (8) aus Spitzguss-Kunststoff und mit einem Magnetelement (9), wobei der Magnethalter (8) und das Magnetelement (9) als Klar abgegrenzte Bauteile ausgeführt sind, wobei das Magnetelement (9) in den Kunststoff des Magnethalters (8) eingespritzt und der Magnethalter (8) mit der Welle (4) verbindbar ist, der Magnethalter (8) hohlzylindrisch in Form einer Hülse ausgebildet ist, eine Stirnseite der Magnet-Baueinheit von dem Magnetelement (9) gebilde ist, und der Magnethalter (8) eine zylindrische Ausnehmung aufweist und mit dieser zylindrischen Ausnehmung auf der Welle (4) aufschiebbar ist, **dadurch gekennzeichnet, dass** eine topfförmige Magnet-Baueinheit gebilded ist und an der Mantelfläche (11) der zylindrischen Ausnehmung im Magnethalter (8) ein Federelement (10) angeordnet ist, das quer zur Wellenachse eine Federkraft erzeugt, und das Federelement (10) in eine Einlegenut (12) in der Mantelfläche (11) der zylindrischen Ausnehmung eingesetzt ist.

2. Magnet-Baueinheit nach Anspruch 1, **dadurch gekennzeichnet, dass** der Magnethalter (8) im Bereich einer Stirnseite (13) der Welle (4) angeordnet und das Magnetelement (9) der Stirnseite (13) unmittelbar vorgelagert ist.

3. Magnet-Baueinheit nach Anspruch 2, **dadurch gekennzeichnet, dass** das Magnetelement (9) scheibenförmig ausgebildet ist.

4. Magnet-Baueinheit nach einem der Ansprüche 1 bis 3, **dadurch gekennzeichnet, dass** die Erstreckung des Magnetelements (9) in Radialrichtung den Durchmesser der Welle (4) übersteigt.

5. Magnet-Baueinheit nach einem der Ansprüche 1 bis 4, **dadurch gekennzeichnet, dass** das Magnetelement (9) durch Verschmelzung fest und insbesondere drehsicher im Magnethalter (8) aufgenommen ist.

6. Magnet-Baueinheit nach Anspruch 1, **dadurch gekennzeichnet, dass** das Federelement als Toleranzring (10) zum Ausgleich unterschiedlicher Wärmeausdehnungen ausgeführt ist.

7. Positionserfassungseinrichtung mit einer Magnet-Baueinheit nach einem der Ansprüche 1 bis 6.

8. Elektromotor mit einer Magnet-Baueinheit auf der Welle des Elektromotors nach einem der Ansprüche 1 bis 7.

9. Elektromotor nach Anspruch 8, **dadurch gekennzeichnet, dass** die Magnet-Baueinheit (5) an der Stirnseite der Rotorwelle (4) teilweise aus dem Gehäuse (2) des Elektromotors (1) heraus ragt, und das Magnetelement (9) sich außerhalb des Gehäuses befindet.

10. Verfahren zur Herstellung einer Magnet-Baueinheit nach einem der Ansprüche 1 bis 6, bei dem ein Magnethalter (8) der Magnet-Baueinheit (5) im Kunststoff-Spritzguss-Verfahren hergestellt, und ein als Klar abgegrenztes Bauteil ausgeführtes Magnetelement (9) in den Magnethalter (8) eingespritzt wird.

## Claims

1. Magnet module for fixing to a shaft, having a magnet holder (8) of injection moulded plastic to be fixed to the shaft (4), and having a magnet element (9), the magnet holder (8) and the magnet element (9) being implemented as clearly delimited components, the magnet element (9) being injection moulded into the plastic of the magnet holder (8) and the magnet holder (8) being connectable to the shaft (4), the magnet holder (8) being formed hollow-cylindrically in the form of a sleeve, an end of the magnet module being formed by the magnet element (9) and the magnet holder (8) having a cylindrical recess and being capable of being pushed onto the shaft (4) with this cylindrical recess,
**characterized in that** a pot-like magnet module is formed and, on the circumferential surface (11) of the cylindrical recess in the magnet holder (8) there is arranged a spring element (10), which generates a spring force transversely with respect to the shaft axis, and the spring element (10) is inserted into an insertion groove (12) in the circumferential surface (11) of the cylindrical recess.

2. Magnet module according to Claim 1, **characterized in that** the magnet holder (8) is arranged in the area of an end (13) of the shaft (4), and the magnet element (9) is located immediately in front of the end (13).

3. Magnet module according to Claim 2, **characterized in that** the magnet element (9) is formed in the manner of a disc.

4. Magnet module according to one of Claims 1 to 3, **characterized in that** the extent of the magnet element (9) in the radial direction exceeds the diameter of the shaft (4).

5. Magnet module according to one of Claims 1 to 4, **characterized in that** the magnet element (9) is accommodated fixedly and in particular securely against rotation in the magnet holder (8) by means of fusing.

6. Magnet module according to Claim 1, **characterized in that** the spring element is implemented as a tolerance ring (10) to compensate for different thermal expansions.

7. Position measuring device having a magnet module according to one of Claims 1 to 6.

8. Electric motor having a magnet module on the shaft of the electric motor according to one of Claims 1 to 7.

9. Electric motor according to Claim 8, **characterized in that** the magnet module (5) at the end of the rotor shaft (4) projects partly out of the housing (2) of the electric motor (1), and the magnet element (9) is located outside the housing.

10. Method for producing a magnet module according to one of Claims 1 to 6, in which a magnet holder (8) of the magnet module (5) is produced in the plastic injection moulding process, and a magnet element (9) implemented as a clearly delimited component is injection moulded into the magnet holder (8).

## Revendications

1. Unité structurelle à aimant destinée à être fixée sur un arbre, comprenant un support d'aimant (8) en plastique moulé par injection destiné à être fixé sur l'arbre (4), et comprenant un élément magnétique (9), le support d'aimant (8) et l'élément magnétique (9) étant réalisés sous forme de composants clairement délimités, l'élément magnétique (9) étant injecté dans le plastique du support d'aimant (8) et le support d'aimant (8) pouvant être connecté à l'arbre (4), le support d'aimant (8) étant réalisé de manière cylindrique creuse sous forme de douille, un côté frontal de l'unité structurelle à aimant étant formé par l'élément magnétique (9), et le support d'aimant (8) présentant un évidement cylindrique et pouvant être poussé avec cet évidement cylindrique sur l'arbre (4), **caractérisée en ce qu'**une unité structurelle à aimant en forme de pot est formée et au niveau de la surface d'enveloppe (11) de l'évidement cylindrique dans le support d'aimant (8) est disposé un élément de ressort (10) qui génère une force de ressort transversalement à l'axe de l'arbre, et l'élément de ressort (10) est inséré dans une rainure d'insertion (12) dans la surface d'enveloppe (11) de l'évidement cylindrique.

2. Unité structurelle à aimant selon la revendication 1, **caractérisée en ce que** le support d'aimant (8) est disposé dans la région d'un côté frontal (13) de l'arbre (4) et l'élément magnétique (9) est monté directement avant le côté frontal (13).

3. Unité structurelle à aimant selon la revendication 2, **caractérisée en ce que** l'élément magnétique (9) est réalisé en forme de disque.

4. Unité structurelle à aimant selon l'une quelconque des revendications 1 à 3, **caractérisée en ce que** l'étendue de l'élément magnétique (9) dans la direction radiale dépasse le diamètre de l'arbre (4).

5. Unité structurelle à aimant selon l'une quelconque des revendications 1 à 4, **caractérisée en ce que** l'élément magnétique (9) est reçu fixement par fusion et notamment de manière solidaire en rotation dans le support d'aimant (8).

6. Unité structurelle à aimant selon la revendication 1, **caractérisée en ce que** l'élément de ressort est réalisé sous forme de bague de tolérance (10) pour la compensation de différentes dilatations thermiques.

7. Dispositif de détection de position comprenant une unité structurelle à aimant selon l'une quelconque des revendications 1 à 6.

8. Moteur électrique comprenant une unité structurelle à aimant sur l'arbre du moteur électrique selon l'une quelconque des revendications 1 à 7.

9. Moteur électrique selon la revendication 8, **caractérisé en ce que** l'unité structurelle à aimant (5) fait saillie au niveau du côté frontal de l'arbre de rotor (4) en partie hors du boîtier (2) du moteur électrique (1), et l'élément magnétique (9) se trouve à l'extérieur du boîtier.

10. Procédé pour fabriquer une unité structurelle à aimant selon l'une quelconque des revendications 1 à 6, dans lequel un support d'aimant (8) de l'unité structurelle à aimant (5) est fabriqué par un procédé de moulage par injection de plastique et un élément magnétique (9) réalisé sous forme de composant clairement délimité est injecté dans le support d'aimant (8).
